# EUROPEAN PATENT SPECIFICATION

(11) **EP 2 088 038 B1**
(45) Date of publication and mention of the grant of the patent: **12.01.2011**
(21) Application number: 08170039.5
(22) Date of filing: 27.11.2008
(51) Int. Cl.: B60R 21/34, B60R 21/237

(54) **Airbag apparatus**
Airbag-Vorrichtung
Dispositif d'airbag

(30) Priority: 06.02.2008 JP 2008026112
(43) Date of publication of application: 12.08.2009
(73) Proprietor: Takata Corporation, Tokyo 106-8510 (JP)
(72) Inventor: Kobayashi, Yoshihiro, Tokyo Tokyo 106-8510 (JP); Yamada, Takahiro, Tokyo Tokyo 106-8510 (JP)
(74) Representative: Vossius & Partner

(56) References cited:
- EP-A- 2 050 632
- WO-A-02/079009
- JP-A- 2005 096 686
- JP-A- 2006 298 150

## Description

The present invention belongs to a technical field of an airbag apparatus for absorbing an impact applied to an object of a collision, or a vehicle, while expanding and developing to an outside of the vehicle by means of a gas from an inflator or the like, in an emergency such as a case when the vehicle collides with the object of the collision, or the like.

Hitherto, an airbag apparatus that absorbs an impact generated by re-collision between a pedestrian or the like and a vehicle, by means of causing the airbag to expand to an outside of a pillar portion of the vehicle at a time of collision between the vehicle and the pedestrian or the like, is known.

JP 2005 096 686 describes an airbag apparatus according to the preamble of claim 1. A further airbag apparatus, in which a vertically long tubular airbag is expanded and developed from the vicinity of a lower end portion of a front pillar toward an upper side along an outside surface of the front pillar, is disclosed in JP-A-2003-306099 (Patent Document 1).

Further, s pillar airbag apparatus in which an inflator is activated upon receiving a collision detection signal from a pedestrian collision detection device, and a hood airbag and a pillar airbag are expanded and developed is disclosed in JP-A-7-108903 (Patent Document 2).

However, the airbag apparatus described in the Patent Document 1 had a structure that only covers the front pillar, and was not provided with an airbag for covering an upper part of a hood. Accordingly, a portion where an impact at a time of a secondary collision cannot be absorbed only by an energy-absorbing effect of the hood, for example, an upper part of a hinge portion for opening and closing the hood could not be covered.

Furthermore, the airbag apparatus described in the Patent Document 2 has a structure where the upper part of the hood is covered by the airbag. However, in this case, both of the airbag for the front pillar and the airbag for the hood are required to be installed. This requires a wide space, and the airbag grows in size, resulting in high cost.

The present invention is made in light of the above-described problems, and the object of the present invention is to provide an airbag apparatus capable of being housed in a small space, and absorbing the impact at the time of the secondary collision in a wide area even though the airbag is that of a compact-sized.

In order to solve the above described problems, the invention is an airbag apparatus according to Claim 1.

The invention according to Claim 2 is **characterized in that** the aforementioned airbag includes a pipe-connecting portion to be connected with the aforementioned pipe, and the folding back area passes through the pipe-connecting portion and extends in a direction perpendicular to the aforementioned longitudinal direction.

The invention according to Claim 3 is **characterized in that** the aforementioned second expanding portion of the aforementioned airbag is installed on the aforementioned front pillar side relative to a hinge portion for opening and closing a hood of the aforementioned vehicle when being housed, and when being expanded, the second expanding portion of the airbag is installed in a manner so as to be expanded above the aforementioned hinge portion.

The invention according to Claim 4 is **characterized in that** the aforementioned second expanding portion of the aforementioned airbag is installed on the aforementioned front pillar side relative to the hood when being housed.

According to the thus constructed airbag apparatus with respect to the present invention, in the airbag apparatus including an airbag, an inflator blowing out a gas into an inside of the aforementioned airbag, a pipe for coupling the airbag with the inflator, a detection device for detecting a collision, a control device for activating the inflator according to a signal from the aforementioned detection device, and a cover for housing the aforementioned airbag, and expanding the aforementioned airbag disposed along a front pillar at an outside of a vehicle, since the aforementioned airbag includes a first expanding portion, a folding back area, and a second expanding portion lining in a longitudinal direction of the airbag, and the aforementioned first expanding portion and the aforementioned second expanding portion are folded back at a folding back line in the aforementioned folding back area, and housed in an overlapping state, a housing space can be made small in comparison with an expanding area.

Further, since the aforementioned airbag includes a pipe-connecting portion to be connected to the aforementioned pipe, and the aforementioned folding back area passes through the aforementioned pipe-connecting portion, and extends in a direction perpendicular to the aforementioned longitudinal direction, an interference with the pipe can be reduced and the airbag can be efficiently folded back when the airbag is folded back.

Furthermore, since the aforementioned second expanding portion of the aforementioned airbag is installed on the aforementioned front pillar side relative to a hinge portion for opening and closing a hood of the aforementioned vehicle when being housed, and when being expanded, the second expanding portion of the airbag is installed in a manner so as to be expanded above the aforementioned hinge portion, the second expanding portion of the airbag can be housed in a small space, and can cover the portion where an impact at a time of a secondary collision cannot be absorbed only by an energy-absorbing effect of the hood, even though the airbag is that of a compact-sized.

Moreover, since the aforementioned second expanding portion of the aforementioned airbag is, when being housed, installed on the aforementioned front pillar side relative to the aforementioned hood, the second expanding portion can be housed in a further small space.

Hereinbelow, an embodiment of the present invention will be explained with reference to the drawings:
Fig. 1 is a view illustrating an embodiment of an airbag with respect to the present invention;
Fig. 2 is a perspective view illustrating a vehicle on which an airbag apparatus of the present embodiment is mounted;
Fig. 3 is a perspective view illustrating the vicinity of the front pillar of the vehicle of the present embodiment;
Fig. 4 is a cross-sectional view taken along a line a-a in Fig. 3;
Fig. 5 is a view illustrating a bag-expanding direction-limiting member;
Fig. 6 is a view illustrating a part of the front pillar looking from a windshield side;
Fig. 7 is a perspective view illustrating the vicinity of the front pillar in which a cover, the airbag, and a fender are omitted;
Fig. 8 is a cross-sectional view taken along a line b-b in Fig. 7;
Fig. 9 is a view illustrating a folding back method for the airbag 20 of the present embodiment;
Fig. 10 is a view illustrating an operation of the airbag apparatus of the present embodiment;
Fig. 11 is a cross-sectional view illustrating a state when the airbag apparatus 10 is operated;
Fig. 12 is a perspective view illustrating the vicinity of the front pillar in a completion stage of an expanding operation;
Fig. 13 is a cross-sectional view taken along a line c-c in Fig. 12;
Fig. 14 is a cross-sectional view taken along a line d-d in Fig. 12;
Fig. 15 is a cross-sectional view taken along a line e-e in Fig. 12; and
Fig. 16 is a perspective view illustrating the vicinity of the front pillar in which the airbag in the completion stage of the expanding operation is omitted.

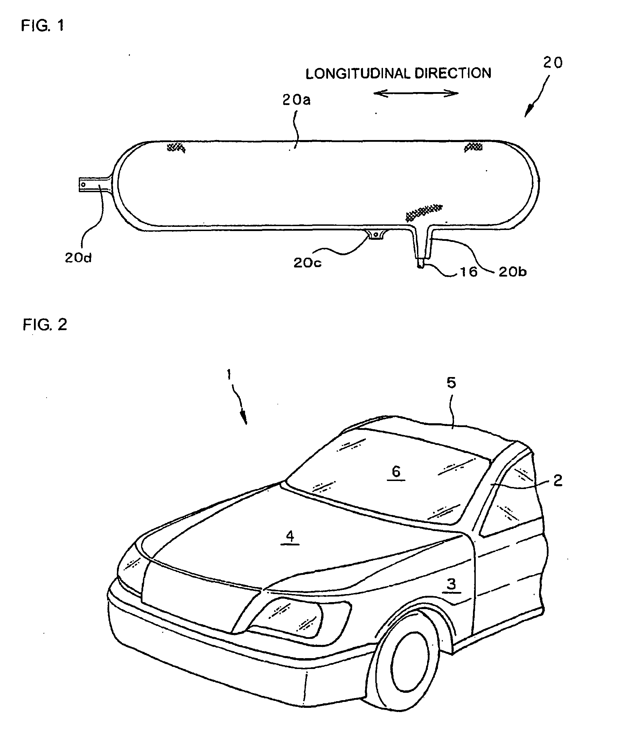

Fig. 1 illustrates an airbag 20 of the present embodiment. The airbag 20 of the present embodiment is formed by folding back and stitching a sheet of a base cloth, and is composed of an expanding portion 20a, a pipe-connecting portion 20b, a first latching portion 20c, and a second latching portion 20c. The expanding portion 20a is a portion having an approximately elliptic shape, and absorbing an impact of a collision between a vehicle and an object of the collision, such as a pedestrian or the like at a time of expanding operation thereof. The pipe-connecting portion 20b is a portion protruding toward a direction perpendicular to a longitudinal direction of the expanding portion 20a, in which a pipe 16 is connected upon being inserted and swaged. The first latching portion 20c is a portion protruding in a direction perpendicular to the longitudinal direction of the expanding portion 20a in the vicinity of the pipe-connecting portion 20b, which is provided at a vehicle rear side in relation to the pipe-connecting portion 20b, and which latches the airbag 20 with a vehicle body. The second latching portion 20c is a portion provided at one end side of the expanding portion 20a of the airbag 20, which latches the airbag 20 with the vehicle body.

Next, a state in which an airbag apparatus 10 including the airbag 20 is mounted on a vehicle 1 will be explained.

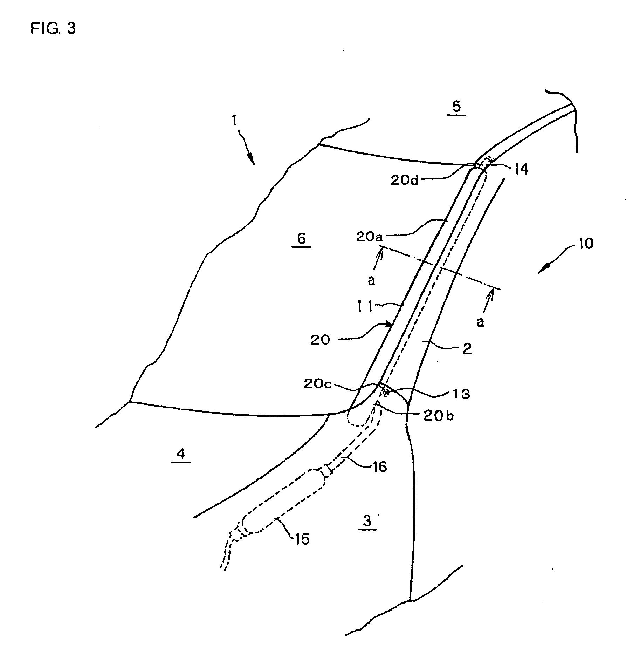

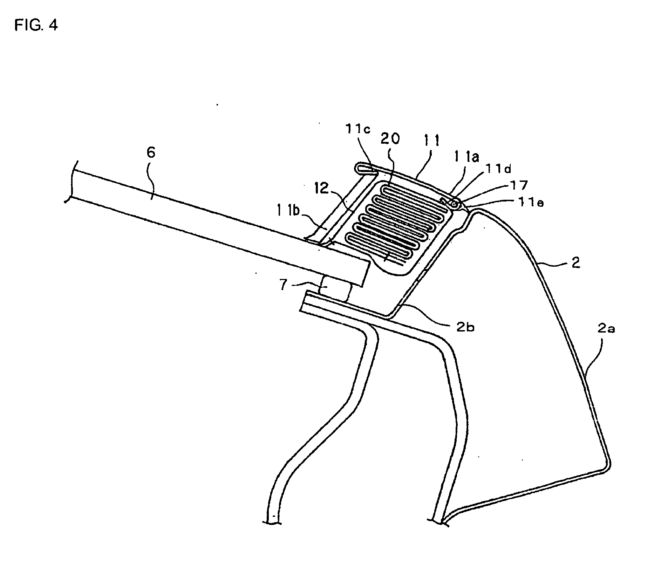

Fig. 2 is a perspective view illustrating a vehicle on which the airbag apparatus 10 of the present embodiment is mounted, Fig. 3 is a perspective view illustrating the vicinity of a front pillar 2 of the vehicle of the present embodiment, and Fig. 4 is a cross-sectional view taken along a line a-a in Fig. 3.

In the drawings, a numeral 1 denotes the vehicle, a numeral 2 denotes the front pillar, a numeral 3 denotes a fender, a numeral 4 denotes a hood, a numeral 5 denotes a roof, a numeral 6 denotes a windshield, a numeral 7 denotes a seal, a numeral 10 denotes the airbag apparatus, a numeral 11 denotes a cover, a numeral 12 denotes a bag case, numerals 13 and 14 denote anchors, a numeral 15 denotes an inflator, a numeral 16 denotes a pipe, and a numeral 20 denotes the airbag.

The vehicle 1 includes a not-illustrated member, or the front pillar 2 that couples an engine room frame with the roof 5. Further, the vehicle 1 further includes the windshield 6 surrounded by the hood 4, the roof 5 and the front pillar 2, and attached thereto via the seal 7.

The air bag apparatus 10 is housed on a windshield 6 side of the front pillar 2, and in the fender 3. The front pillar 2 includes a first surface 2a facing an outside of the vehicle 1 and a second surface 2b facing the windshield 6 side, and the airbag 20 is housed in the cover 11 on a second surface 2b side in a state of being folded back and housed in the bag case 12.

The cover 11 is formed of member having an approximately L-shape in cross-section including an upper portion cover 11a and a first side portion cover 11b on the windshield 6 side, and is disposed so as to hide the airbag 20 that is folded back along the second surface 2b side of the front pillar 2. Incidentally, the folded-back airbag 20 may be directly housed in the cover 11 without being housed in the bag case 12.

In the cover 11, a first folded-back portion 11c on the windshield 6 side, and a second folded-back portion 11d on the front pillar 2 side are provided, and a cover-splash prevention member 17 such as a strap or the like is inserted into the second folded-back portion 11d and is swaged at several parts by means of bashing up the second folded-back portion 11d to an extent that does not damage the design.
As described later, one end 17a of the cover-splash prevention member 17 is latched with the anchor 14, and the other end 17b thereof is latched on the vehicle body side such as the anchor 13, a root portion of the front pillar 2, a member, or the like.

In the vicinity of the second folded-back portion 11d of the upper portion cover 11a, a seal 11e is attached, and this covers a gap between the front pillar 2 and the cover 11. This makes a design characteristic high.

Below the fender 3 or the hood 4, a long inflator 15 generating a gas for expanding the airbag 20 and blowing out the gas into an inside of the airbag 20, the pipe 16 that couples the airbag 20 with the inflator 15 and supplies the gas generated in the inflator 15 into the airbag 20, or the like are housed.

Incidentally, it is preferable that the airbag 20, the inflator 15, the pipe 16, and the cover 11 are modularized.

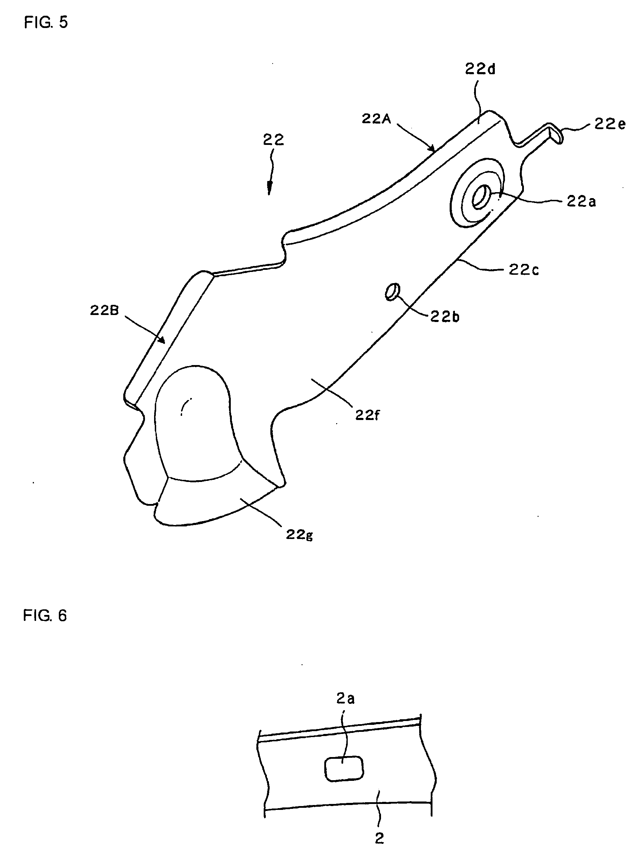

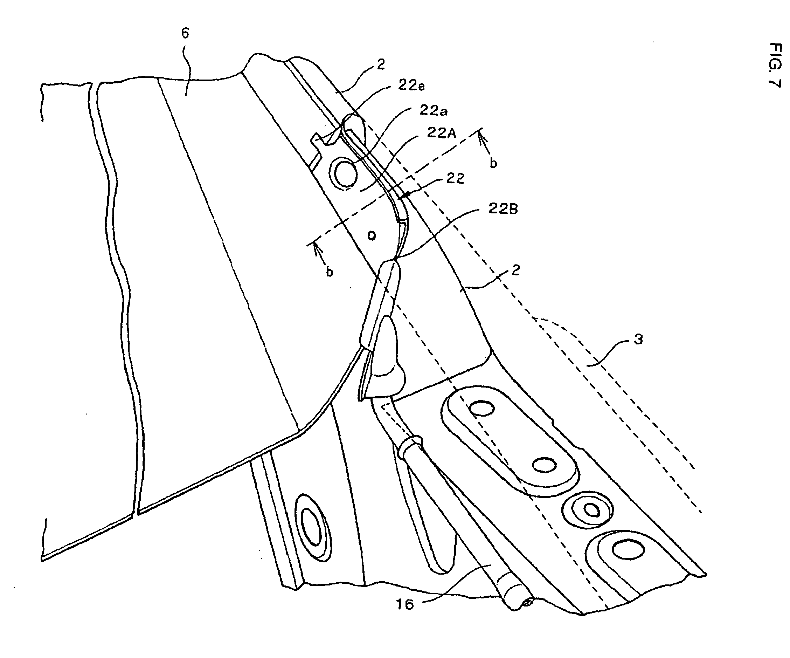

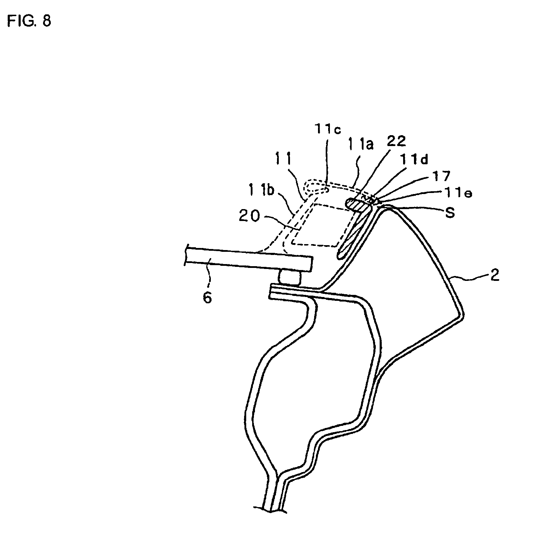

Fig. 5 is a view illustrating a bag-expanding direction-limiting member 22, Fig. 6 is a view of a part of the front pillar 2 looking from a windshield 6 side, Fig. 7 is a perspective view illustrating the vicinity of the front pillar 2 where the cover 11, the airbag 20 and the fender 3 are omitted, and Fig. 8 is a cross-sectional view taken along a line b-b in Fig. 7.

As illustrated in Fig. 5, the bag-expanding direction-limiting member 22 is formed to have an approximately L shape in cross-section, and is composed of a fixing portion 22A formed of a plate-shaped member and a hiding portion 22B for hiding a gap between the fender 3 and the windshield 6. The fixing portion 22A is provided with a vehicle body-fixing portion 22a that is fixed to the vehicle 1 with a screw or the like, a bag-fixing portion 22b for fixing the airbag 20, a side wall guide portion 22c rising up in a direction approximately perpendicular to the windshield 6, and an extension portion 22d extending approximately in parallel with the upper portion cover 11a from an end portion of the side wall guide portion 22c. Further, in the side wall guide portion 22c, a hooking portion 22e to be hooked on a latching hole 2a provided in the front pillar 2 illustrated in Fig. 6 is provided. The hiding portion 22B is provided with a continuous portion 22f that is allowed to communicate with the fixing portion 22A with a smooth curved surface following along the front pillar 2, and a curved portion 22g provided at an end portion on a side opposite to the fixing portion 22A, through which the pipe 16 passes.

Fig. 7 and Fig. 8 illustrate a state in which the bag-expanding direction-limiting member 22 is attached to the vehicle 1. The bag-expanding direction-limiting member 22 hooks the hooking portion 22e illustrated in Fig. 5 on the latching hole 2a of the front pillar 2 illustrated in Fig. 6, and fixes the vehicle body-fixing portion 22a to the vehicle 1 with a screw or the like. At this moment, the fixing portion 22A is securely attached in a manner so as to be fitted along the front pillar 2. The hiding portion 22B is allowed to hide the gap between the fender 3 and the windshield 6, and to prevent the airbag 20 from hiding under the fender 3, and to guide the pipe 16 with the curved portion 22g.

As described above, the airbag apparatus 10 illustrated in Fig. 3 and Fig. 4 is fixed after the bag-expanding direction-limiting member 22 is attached to the vehicle 1, and the cover 11 is closed, as illustrated in Fig. 8.

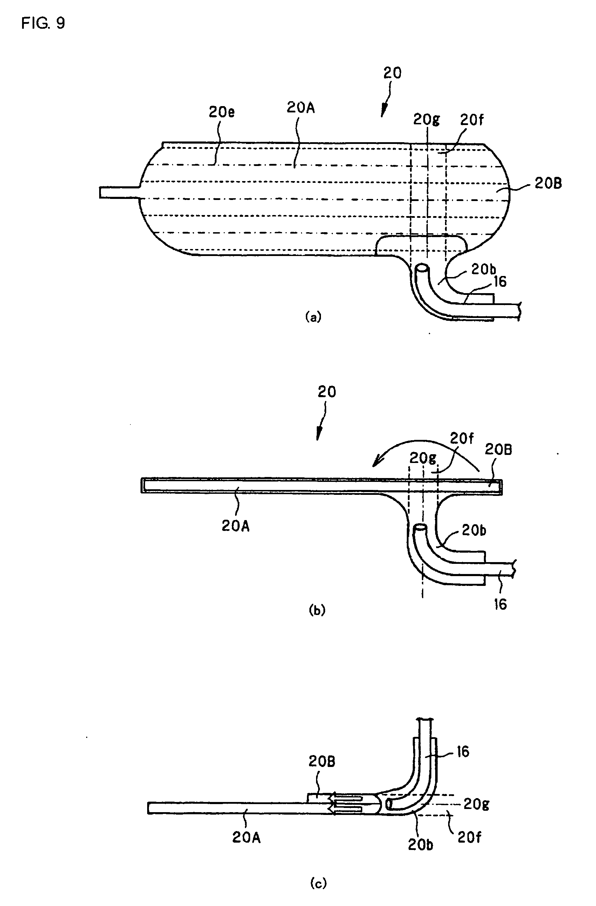

Next, a folding back method for the airbag 20 of the present embodiment will be explained. Fig. 9 is a view illustrating the folding back method for the airbag 20 of the present embodiment.

Fig. 9(a) illustrates a step to fold back the expanding portion 20a of the airbag 20 illustrated in Fig. 1 into concertinas in parallel with a longitudinal direction thereof. In this step, the airbag 20 is folded back into concertinas along each bellows-folding line 20e extending approximately in parallel with the longitudinal direction. Incidentally, although described later, a numeral 20f denotes a folding back area, a numeral 20g denotes a folding back line, a numeral 20A denotes a first expanding portion, and a numeral 20B denotes a second expanding portion. The first expanding portion 20A, the folding back area 20f, and the second expanding portion 20B are provided lining along a longitudinal direction, and the folding back line 20g is disposed in the folding back area 20f.

Fig. 9(b) illustrates a step where the airbag 20 that is folded back into concertinas is folded back in the folding back area 20f that passes through the pipe-connecting portion 20b and extending in a direction perpendicular to the longitudinal direction, at a folding back line 20g.

Fig. 9(c) illustrates a shape after the airbag 20 is folded back. The first expanding portion 20A and the second expanding portion 20B overlap with each other by means of folding back the airbag 20 as illustrated in Fig. 9(b), and thereby a length of the airbag 20 in the longitudinal direction after being folded back is brought to be smaller than that before the airbag 20 is folded back. Further, since the airbag 20 is folded back at the folding back line 20g in the folding back area 20f in the vicinity of the pipe-connecting portion 20b, an interference with the pipe 16 can also be avoided when the airbag 20 is folded back.

Incidentally, the step for folding back the airbag 20 into concertinas illustrated in Fig. 9(a) and a step for folding back the airbag 20 at the folding back line 20g illustrated in Fig. 9(b) may also be performed in a reversed order.

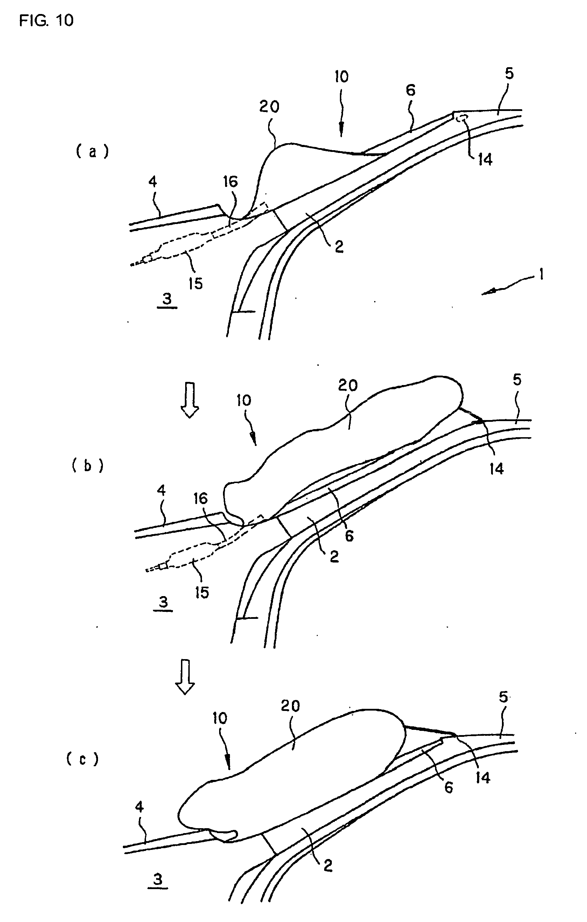

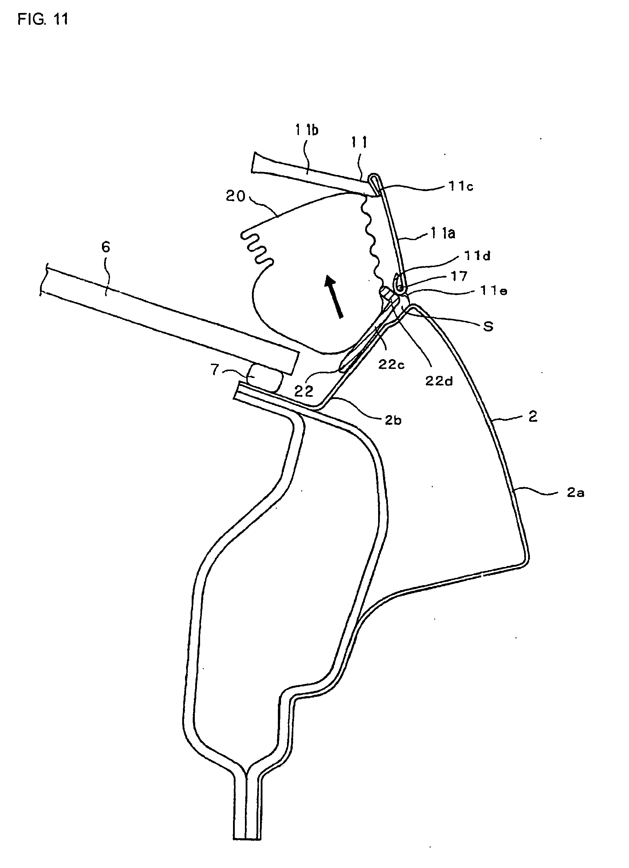

Next, an operation of the airbag apparatus 10 of the present embodiment will be explained. Fig. 10 is a view illustrating the operation of the airbag apparatus 10 of the present embodiment, and Fig. 11 is a cross-sectional view illustrating a state when the airbag apparatus 10 is operated.

The airbag apparatus 10 in a housed state as illustrated in Fig. 3, is operated by means of a control device or the like on the basis of a detection signal, in a case that the vehicle 1 collides with a not-illustrated object of the collision, and an impact force generated in the vehicle 1 is detected by means of a not-illustrated detecting device or the like.

Fig. 10(a) illustrates an initial stage of an expanding operation, in which the airbag apparatus 10 starts to be operated, the gas flows into the airbag 20 through the pipe 16 from the inflator 15 that is housed in the fender 3 or the like, and the airbag 20 starts to be expanded. In the initial stage of the expanding operation, the airbag 20 starts to be expanded from a fender 3 side, and the cover 11 illustrated in Fig. 3 and Fig. 4 is opened by means of an expanding pressure.

At this moment, as illustrated in Fig. 9(c), the second expanding portion 20B of the airbag 20 is installed on a front pillar 2 side in relation to a hinge portion 9 for opening and closing the hood 4 of the vehicle 1, or the hood 4 in a housed time, and starts to be expanded from the folded-back state.

Furthermore, as illustrated in Fig. 11, an expanding direction of the airbag 20 in a vehicle center direction is limited by means of the side wall guide portion 22c and the extension portion 22d of the bag-expanding direction-limiting member 22. As a result, a gap S between the cover 11 and the front pillar 2 is hidden and thereby there is no possibility that the airbag 20 is protruded from the gap S, and a stable operation can be performed.

Fig. 10(b) illustrates an intermediate stage of the expanding operation, in which the gas flows into the airbag 20 through the pipe 16 from the inflator 15, and the airbag 20 continues to be expanded. In the intermediate stage of the expanding operation, an entire airbag 20 is completely exposed outward from a folded-back state.

At this moment, there is no possibility that the airbag 20 intrudes into the engine room by means of the bag-expanding direction-limiting member 22. Moreover, since the airbag 20 starts to be expanded on the front pillar 2 side in relation to the hinge portion 9, or the hood 4 from the folded-back state, the interference with the fender 3, the hood 4, or the like can be reduced. Thereafter, the folded-back second expanding portion 20B starts to be expanded on the fender 3 and the hood 4 sides from the front pillar 2 side in a reversed manner by means of the expanding pressure.

Fig. 10(c) illustrates a completion stage of the expanding operation, in which the expanding operation of the airbag 20 is completed. In the completion stage of the expanding operation, the airbag 20 is completely expanded. At this moment, the folded-back second expanding portion 20B is configured to be expanded above the hinge portion 9.

A state of the airbag apparatus 10 in the completion stage of the expanding operation will be explained below in detail.

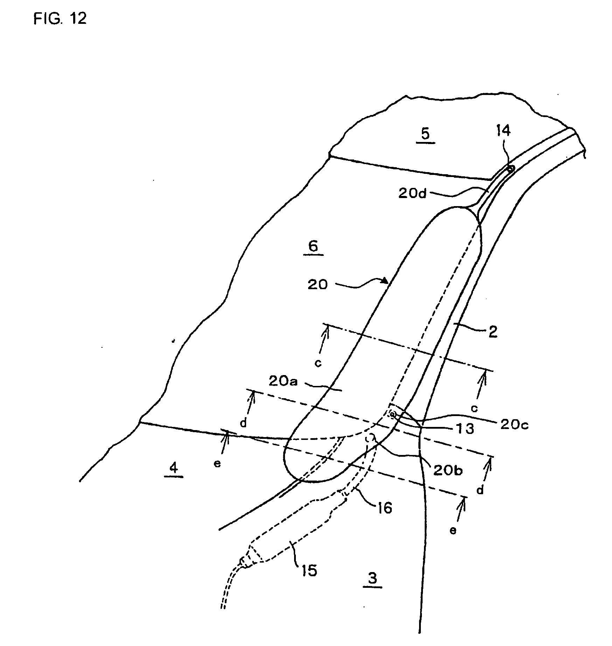

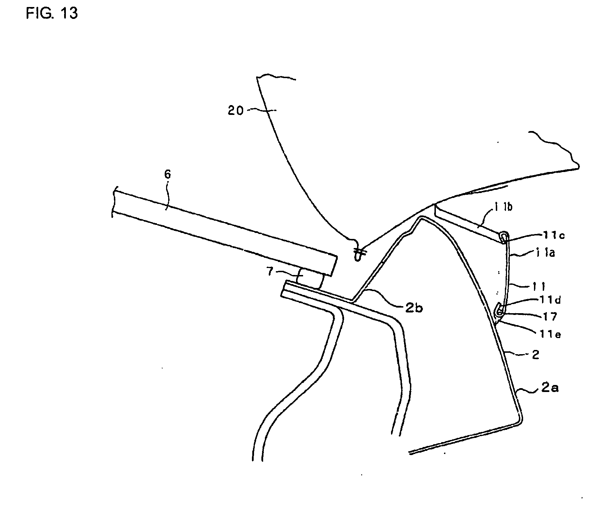

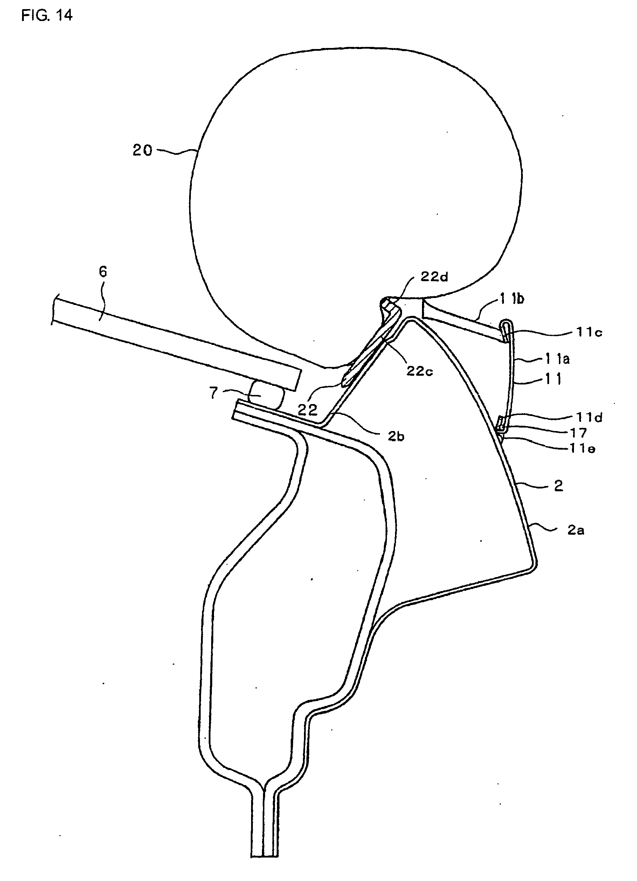

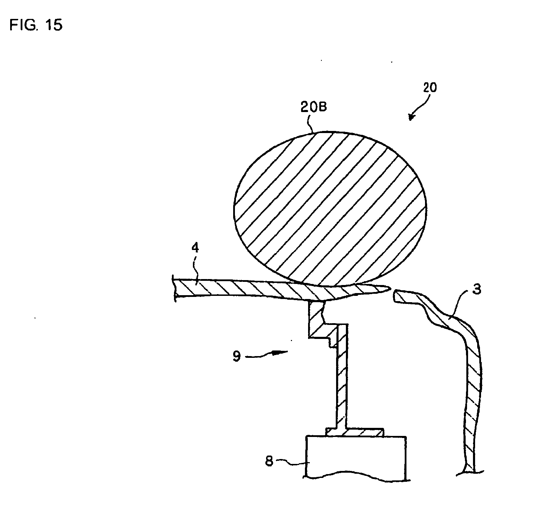

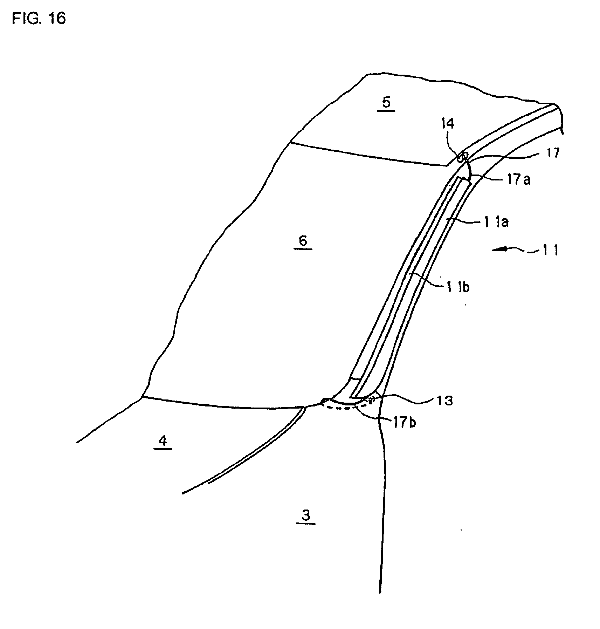

Fig. 12 is a perspective view illustrating the vicinity of the front pillar 2 in the completion stage of the expanding operation, Fig. 13 is a cross-sectional view taken along a line c-c in Fig. 12, Fig. 14 is a cross-sectional view taken along a line d-d in Fig. 12, Fig. 15 is a cross-sectional view taken along a line e-e in Fig. 12, and Fig. 16 is a perspective view illustrating the vicinity of the front pillar 2 in the completion stage of the expanding operation where the airbag 20 is omitted.

In the completion stage of the expanding operation, the airbag 20 is developed in a direction along the front pillar 2 above a part of the fender 3 and the hood 4, and in front of the front pillar 2.

As illustrated in Fig. 13, in the completion stage, the cover 11 is separated from the front pillar 2 by means of the pressure at the time of the expanding operation.

Further, as illustrated in Fig. 14, in the completion stage, the first expanding portion 20A of the airbag 20 is limited to be expanded in a direction in front of the front pillar 2 and to the vehicle center direction, which have a high possibility to collide with the object of the collision, such as the pedestrian or the like, by means of the side wall guide portion 22c and the extension portion 22d of the bag-expanding direction-limiting member 22.

Furthermore, as illustrated in Fig. 15, in the completion stage, the second expanding portion 20B of the airbag 20 is expanded above the hinge portion 9 in a manner so as to cover the hinge portion 9 for opening and closing the hood 4 to a front member 8. Incidentally, in Fig. 15, the pipe 16 is omitted.

At this moment, as illustrated in Fig. 16, since the cover 11 is latched on the vehicle body 1 side by means of the cover-splash prevention member 17 via the anchors 13 and 14, there is no possibility that the cover 11 is splashed from the vehicle 1. Incidentally, the cover-splash prevention member 17 may be divided into a first cover-splash prevention member 17a that couples the anchor 14 with the cover 11 and a second cover-splash prevention member 17b that couples the anchor 13 with the cover 11.

As described above, since the cover 11 is separated from the vehicle 1 in a state of being coupled with the vehicle 1 via the cover-splash prevention member 17 at the time of expanding operation of the airbag 20, a load is hard to be applied to the cover 11, and a crack or a splash of the cover 11 can be prevented.

Incidentally, in this embodiment, although the cover-splash prevention member 17 is latched on the anchors 13 and 14 for latching the airbag 20, the construction may be made such that the cover-splash prevention member 17 is latched on the vehicle body via other member.

In the completion stage of the expanding operation, since the airbag 20 is developed in a direction along the front pillar 2 in front of the front pillar 2, the airbag 20 can be developed to a wide area.

According to the thus constructed airbag apparatus 10 with respect to the present invention, in the airbag apparatus 10 including the airbag 20, the inflator 15 blowing out the gas into the airbag 20, a pipe 16 for coupling the airbag 20 and the inflator 15, a detection device for detecting a collision, a control device for activating the inflator 15 by means of a signal from the detection device, and a cover 11 for housing the airbag 20, and expanding the airbag 20 disposed along the front pillar 2 at an outside of the vehicle, the airbag 20 includes the first expanding portion 20A, the folding back area 20f, and the second expanding portion 20B lining in a longitudinal direction, and the first expanding portion 20A and the second expanding portion 20B are folded back at the folding back line 20g in the folding back area 20f, and are housed in an overlapping state. Accordingly, a housing space can be made small in comparison with an expanding area.

Further, since the airbag 20 includes a pipe-connecting portion 20b to be connected with the pipe 16, and the folding back area 20f passes through the pipe-connecting portion 20b and extends in a direction perpendicular to the longitudinal direction, the interference with the pipe 16 at the time when the airbag 20 is folded back can be reduced, and the airbag 20 can be efficiently folded back.

Furthermore, since the second expanding portion 20B of the airbag 20 is installed on the front pillar 2 side in relation to the hinge portion 9 for opening and closing the hood 4 of the vehicle 1 when housed, and is installed so as to expand above the hinge portion 9 when expanded, the second expanding portion 20B can be housed in a small space, and the airbag 20 can cover the portion where an impact at a time of a secondary collision cannot be absorbed only by an energy-absorbing effect of the hood, even though the airbag is that of a compact-sized.

Moreover, since the second expanding portion 20B of the airbag 20 is installed on the front pillar 2 side in relation to the hood 4 when housed, the second expanding portion 20B of the airbag 20 can be housed in a further small space.

According to the thus constructed airbag apparatus with respect to the present invention, a housing space can be made small in comparison with an expanding area. Further, the airbag 20 can cover a portion where an impact at a time of a secondary collision cannot be absorbed only by an energy-absorbing effect of a hood even though the airbag 20 is that of the compact-sized.

## Claims

1. An airbag apparatus comprising:
an airbag (20);
an inflator (15) blowing out a gas into an inside of the airbag;
a pipe (16) for coupling the airbag with the inflator;
a detection device for detecting a collision;
a control device for activating the inflator according to a signal from the detection device; and
a cover (11) for housing the airbag, and expanding the airbag (20) disposed when mounted along a front pillar (2) at an outside of a vehicle, **characterized in that**
the airbag (20) includes a first expanding portion (20A), a folding back area (20f), and a second expanding portion (20B) lining in a longitudinal direction of the airbag (20), and **in that**
the first expanding portion (20H) and the second expanding portion (20B) are folded back at a folding back line (20G) in the folding back area (20f), and housed in an overlapping state.

2. The airbag apparatus according to Claim 1 wherein the airbag includes a pipe-connecting portion (20b) to be connected with the pipe (16), and the folding back area (20f) passes through the pipe-connecting portion (20b) and extends in a direction perpendicular to the longitudinal direction of the airbag (20).

3. The airbag apparatus according to Claim 1 or 2, wherein the second expanding portion (20B) of the airbag (20) is installed on the front pillar side (2) relative to a hinge portion for opening and closing a hood of the vehicle when being housed, and when being expanded, the second expanding portions (20B) of the airbag (20) is installed in a manner so as to be expanded above the hinge portion.

4. The airbag apparatus according to any one of Claims 1 through 3, wherein the second expanding portion (20B) of the airbag (20) is installed on the front pillar side relative to the hood (4) when being housed.

## Patentansprüche

1. Airbag-Vorrichtung mit:
einem Gassack (20);
einer Aufblaseinrichtung (15), die Gas ins Innere des Gassacks bläst;
einem Rohr (16) zum Verbinden des Gassacks mit der Aufblaseinrichtung;
einer Erkennungseinrichtung zum Erkennen eines Aufpralls;
einer Steuereinrichtung zum Aktivieren der Aufblaseinrichtung entsprechend einem Signal von der Erkennungseinrichtung; und
einer Abdeckung (11) zum Unterbringen des Gassacks, und
zum Ausdehnen des Gassacks (20), so dass er, wenn er entlang einer A-Säule (2) angebracht ist, sich an einer Außenseite des Fahrzeugs befindet,
**dadurch gekennzeichnet, dass**
der Gassack (20) einen ersten Dehnabschnitt (20A), einen Faltbereich (20f) und einen zweiten Dehnabschnitt (20B) aufweist, welche in Längsrichtung des Gassacks (20) ausgerichtet sind, und dass
der erste Dehnabschnitt (20A) und der zweite Dehnabschnitt (20B) an einer Faltlinie (20g) im Faltbereich (20f) umgefaltet werden und übereinanderliegend untergebracht werden.

2. Airbag-Vorrichtung nach Anspruch 1, wobei der Gassack einen zur Verbindung mit dem Rohr (16) vorgesehenen Rohrverbindungsabschnitt (20b) aufweist und der Faltbereich (20f) den Rohrverbindungsabschnitt (20b) durchquert und sich senkrecht zur Längsrichtung des Gassacks (20) erstreckt.

3. Airbag-Vorrichtung nach Anspruch 1 oder 2, wobei der zweite Dehnabschnitt (20B) des Gassacks (20) im untergebrachten Zustand an der A-Säulenseite (2) bezüglich eines Gelenkteils zum Öffnen und Schließen einer Motorhaube des Fahrzeugs angeordnet ist, und der zweite Dehnabschnitt (20B) des Gassacks (20) so angeordnet ist, dass er sich beim Ausdehnen über dem Gelenkteil ausdehnt.

4. Airbag-Vorrichtung nach einem der Ansprüche 1 bis 3, wobei der zweite Dehnabschnitt (20B) des Gassacks (20) im untergebrachten Zustand an der A-Säulenseite bezüglich der Motorhaube (4) angeordnet ist.

## Revendications

1. Dispositif d'airbag comprenant: un airbag (20);
un générateur de gaz (15) soufflant un gaz à l'intérieur de l'airbag ;
un conduit (16) pour relier l'airbag au générateur de gaz ; un dispositif détecteur pour la détection d'un choc ;
un dispositif de commande pour activer le générateur de gaz en fonction d'un signal du dispositif détecteur ; et
un couvercle (11) pour le logement de l'airbag et l'expansion de l'airbag (20), disposé en option le long d'un montant avant (2) à l'extérieur du véhicule, **caractérisé en ce que** l'airbag (20) comporte une première partie expansible (20A), une zone de rabattement (20f), et une deuxième partie expansible (20B) s'étendant dans une direction longitudinale de l'airbag (20), et
**en ce que** la première partie expansible (20A) et la deuxième partie expansible (20B) sont rabattues sur une ligne de rabattement (20g) dans la zone de rabattement (20f), et logées en état de chevauchement.

2. Dispositif d'airbag selon la revendication 1, où l'airbag comprend une partie de raccord au conduit (20b) à raccorder au conduit (16), et où la zone de rabattement (20f) traverse la partie de raccord au conduit (20b) et s'étend dans une direction perpendiculaire à la direction longitudinale de l'airbag (20).

3. Dispositif d'airbag selon la revendication 1 ou la revendication 2, où, lorsqu'elle est logée, la deuxième partie expansible (20B) de l'airbag (20) est disposée du côté du montant avant (2) par rapport à une partie d'articulation pour l'ouverture et la fermeture du capot du véhicule, et où, lorsqu'elle est gonflée, la deuxième partie expansible (20B) de l'airbag (20) est disposée de manière à être gonflée au-dessus de la partie d'articulation.

4. Dispositif d'airbag selon l'une quelconque des revendications 1 à 3, où, lorsqu'elle est logée, la deuxième partie expansible (20B) de l'airbag (20) est disposée du côté du montant avant par rapport au capot (4).
